Europäisches Patentamt

**European Patent Office**

Office européen des brevets

(19)

(11) **EP 0 828 244 B1**

(12) **EUROPEAN PATENT SPECIFICATION**

(45) Date of publication and mention
of the grant of the patent:
**29.03.2000 Bulletin 2000/13**

(51) Int Cl.⁷: **G11B 7/00**, G11B 7/12,
G11B 7/125, G11B 7/135

(21) Application number: **97306632.7**

(22) Date of filing: **29.08.1997**

(54) **Optical pickup using an optical phase plate**

Optische Abtastvorrichtung mit optischer Phasenplatte

Appareil de lecture optique utilisant une lame de phase optique

(84) Designated Contracting States:
**DE FR GB NL**

(30) Priority: **29.08.1996 KR 9637946**

(43) Date of publication of application:
**11.03.1998 Bulletin 1998/11**

(73) Proprietor: **Samsung Electronics Co., Ltd.
Suwon-city, Kyungki-do (KR)**

(72) Inventors:
• **Yoo, Jang-Hoo
Youngdungpo-gu, Seoul (KR)**
• **Lee, Chul-Woo
Yongsan-gu, Seoul (KR)**
• **Chung, Chong-Sam
Sungnam-city, Kyungki-do (KR)**
• **Seong, Pyong-Yong
Songpa-gu, Seoul (KR)**

• **Cho, Kun-Ho
Suwon-city, Kyungki-do (KR)**
• **Choi, Hyun-Seob
Suwon-city, Kyungki-do (KR)**
• **Lee, Yong-Hoon
Suwon-city, Kyungki-do (KR)**
• **Kim, Tae-Kyung
Suwon-city, Kyungki-do (KR)**
• **Park, No-Kyong
Suwon-city, Kyungki-do (KR)**

(74) Representative: **Chugg, David John et al
Appleyard Lees,
15 Clare Road
Halifax, West Yorkshire HX1 2HY (GB)**

(56) References cited:
**EP-A- 0 587 297        EP-A- 0 747 893
EP-A- 0 803 867        JP-A- 8 055 363
US-A- 5 303 221**

Printed by Jouve, 75001 PARIS (FR)

**Description**

The present invention relates to an optical pickup apparatus which can record and read information on and from a digital video disk (DVD) and a recordable compact disk (CD-R), respectively.

Recording media for recording and reading the information such as video, audio or data are a disk, a card or a tape. Among them, the disk type is chiefly used. Recently, in the field of the optical disk apparatus, a laser disk (LD), a compact disk (CD) and a digital video disk (DVD) have been developed. Such an optical disk includes a plastic or glass medium having a certain thickness along an axial direction to which light is incident, and a signal recording surface on which information is recorded and located on the plastic or glass medium.

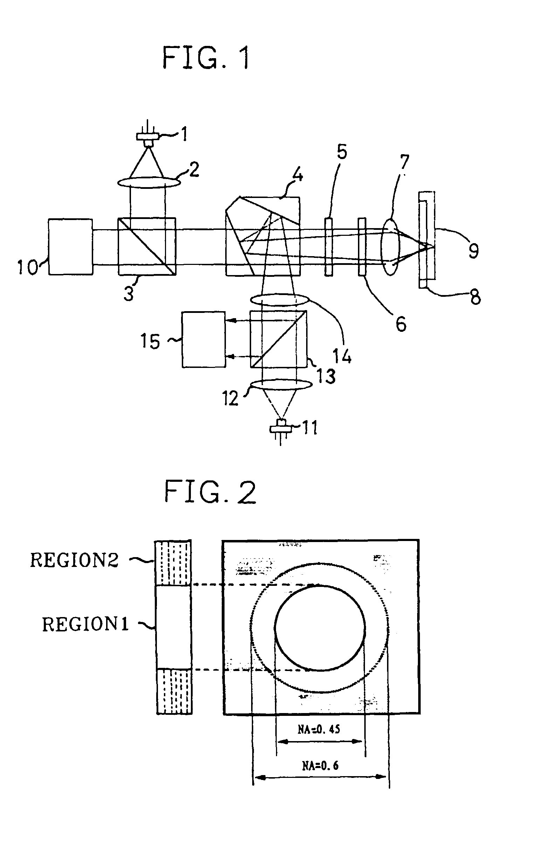

Current high-density optical disk systems enlarge a numerical aperture of an objective lens in order to increase recording density, and use a short wavelength light source of 635nm or 650nm. Accordingly, the high-density optical disk system can record or read signals on or from a digital video disk, and can also read signals from a CD. However, to be compatible with a recent type of a CD, that is, a recordable CD (CD-R), light having a wavelength of 780nm should be used. This is due to the recording characteristic of the CD-R recording medium. As a result, using lights of 780nm and 650nm wavelengths in a single optical pickup becomes very important for compatibility of the DVD and the CD-R. A conventional optical pickup to be compatible with the DVD and the CD-R will be described below with reference to Figure 1.

Figure 1 shows an optical pickup using two laser diodes as light sources for a DVD and a CD-R and a single objective lens. The Figure 1 optical pickup uses laser light having a wavelength of 635nm when reproducing a DVD, and uses laser light having a wavelength of 780nm when recording and reproducing a CD-R. Light having the 635nm wavelength emitted from a laser diode light source 1 passes through a collimating lens 2 and a polarization beam splitter 3 and then goes to an interference filter type prism 4. Light having the 780nm wavelength emitted from a laser diode light source 11 passes through a collimating lens 12, a beam splitter 13 and a converging lens 14 and then goes to the prism 4, which converges the light having the 780nm wavelength. An optical system having such a structure is called a "finite optical system". The prism 4 transmits the light having a wavelength of 635nm reflected from the polarization beam splitter 3, and reflects the light converged by the converging lens 14. As a result, the light from the light source 1 is incident to a quarter-wave plate 5 in the form of a parallel beam by the collimating lens 2, while the light from the light source 11 is incident to the quarter-wave plate 5 in the form of a diverging beam by the converging lens 14 and the prism 4. The light transmitting through the quarter-wave plate 5 is incident to an objective lens 7.

The objective lens 7 is designed to be focused on a signal recording surface in a DVD 8 having a thickness of 0.6mm, by which the light of the 635nm wavelength emitted from the light source 1 is focused on the signal recording surface in the DVD 8. Therefore, the light reflected from the signal recording surface of the DVD 8 contains information recorded on the signal recording surface. The reflected light transmits through the polarization beam splitter 3, and is then incident to a light detector 10 for detecting optical information.

If the finite optical system described above is not used, when the 780nm wavelength light emitted from the light source 11 is focused on a signal recording surface in the CD-R 9 having 1.2mm thickness using the above-described objective lens 7, spherical aberration is generated due to difference in thickness between the DVD 8 and the CD-R 9. In more detail, the spherical aberration is due to a fact that the distance between the signal recording surface of the CD-R 9 and the objective lens 7 is farther than that between the signal recording surface of the DVD 8 and the objective lens 7, along an optical axis. To reduce such a spherical aberration, a construction of the finite optical system including the converging lens 14 is required. By using the variable aperture 6 to be described later with reference to Figure 2, the 780nm wavelength light forms an optimized beam spot on the signal recording surface of the CD-R 9. The 780nm wavelength light reflected from the CD-R is reflected by the prism 4 and then the beam splitter 13, so as to be detected in the light detector 15.

The variable aperture 6 of Figure 1 has a thin film structure as shown in Figure 2 which can selectively transmit the rays of the light incident to the region not more than the numerical aperture (NA) of 0.6 coinciding with the diameter of the objective lens 7. That is, the variable aperture 6 is partitioned into two regions based on the NA of 0.45 with respect to an optical axis. Among the two regions, a first region 1 transmits both 635nm and 780nm wavelength lights and a second region 2 totally transmits the 635nm wavelength light and totally reflects the 780nm wavelength light. The region 1 has the numerical aperture of 0.45 or below, and the region 2 is an outer region of the region 1 and is made by coating a dielectric thin film. The region 1 is comprised of a quartz ($SiO_2$) thin film in order to remove optical aberration generated by the dielectric thin film coated region 2. By using the variable aperture 6, the 780nm wavelength light transmitting the region 1 having the 0.45 NA or below forms a beam spot appropriate to the CD-R 9 on the signal recording surface thereof. Thus, the Figure 1 optical pickup uses an optimum light spot when a disk mode is changed from the DVD 8 to the CD-R 9. Accordingly, the Figure 1 optical pickup is compatible to use the CD-R.

However, the Figure 1 optical pickup as described above should form a "finite optical system" with respect to 780nm wavelength light in order to remove spherical aberration generated when compatibly changing a DVD and a CD-R. As well, due to the optical thin film, that is, the dielectric thin film which is formed in the region 1 having the NA of 0.45 or above, an optical path difference between the light transmitting the region 2 having the NA of 0.45 or below and that transmitting the region 2 having the NA of 0.45 or above is generated. To eradicate this difference, it is necessary to form an optical thin film in the region 1. Due to this reason, quartz coating is formed in the region 1 and a multi-layer thin film is formed in the region 2. However, such a fabricating process does not become only complicated but also adjustment of the thickness of the thin film should be performed precisely in units of "μm". Thus, it has been difficult in mass-producing the optical pickup.

US 5 303 221 discloses an optical pickup apparatus able to read two types of optical disc and has a phase hologram between a light source and focusing lens assembly.

JP 8 055 363 (cf. corresponding post-published US 5 703 856) discloses an optical pickup apparatus having phase shift means, which is operable to read two types of disc, according to the preamble of claim 1.

EP 803 867 and EP 747 893, relevant according to Article 54(3), disclose an optical pickup apparatus operable to read two types of optical disc having an aperture limiting element, however, not having an objective lens comprising an annular shielding portion.

An aim of preferred embodiments of the present invention is to provide an optical pickup apparatus which is compatible to a digital video disk and a recordable compact disk by removing a spherical aberration using a phase plate.

According to a first aspect of the present invention, there is provided an optical pickup apparatus arranged for use with at least two optical recording media, which have different distances from an optical pickup to information recording surfaces and use light of different wavelengths for recording and reading information, the optical pickup apparatus comprising:

  laser light sources for emitting first light having a relatively shorter wavelength and second light having a relatively longer wavelength, respectively;

  an objective lens having a predetermined focal length in which the focal point of the objective lens according to the first light coincides, in use, with the position of an information recording surface in a first optical recording medium of a first type which has, in use, an information recording surface a first distance from the objective lens;

  optical detection means;

  means for controlling an optical path so that the light emitted from one of the laser light sources is directed to the objective lens and the light output from the objective lens is directed to the optical detection means, wherein one of the first and second lights is used according to an optical recording medium to be used; and

  phase shift means, located between the optical path control means and the objective lens, characterized in that the phase shift means is adapted for shifting the phase of a part of the second light proceeding from the optical path control means to the objective lens, thereby reducing the size of a beam spot which, in use, is formed on the position of an information recording surface in a second optical recording medium of a second type, which has, in use, an information recording surface a second distance, which is greater than the first distance, from the objective lens by the second light focused with the objective lens,

Said phase shift means may be a phase plate including two regions having different thicknesses. The thinner of the two regions of said phase plate preferably comprises a portion for shifting the phase of the second light, and includes a groove, having a predetermined width and depth which is formed in a generally concave fashion inwards from a surface of said phase plate relatively closer to said optical path control means. Said thinner region may have a shape of concentric circles with respect to the optical axis of said objective lens. Said groove may have an optical depth for phase-shifting the first light by a degree of 360 and phase-shifting the second light by a degree of 180.

Preferably the relatively thicker region of said phase plate comprises a portion for shifting the phase of the second light, and includes a protrusion having a predetermined width and height which is protruded outwards from the surface of said phase plate relatively closer to said optical path control means. Said thicker region may have a shape of concentric circles with respect to the optical axis of said objective lens.

Preferably said protrusion has an optical height for phase-shifting the first light by a degree of 360 and phase-shifting the second light by a degree of 180.

Said phase plate may be fabricated by one of etching, injection and molding operations.

Said phase shift means may be fabricated by etching a groove into the objective lens, the groove having a predetermined width and depth, which is concave and which extends inwards from a surface of said objective lens relatively closer to said optical path control means.

Said phase shift means may have a shape of a protrusion having a predetermined width and height, which is protruded outwards from the surface of said objective lens relatively closer to said optical path control means.

Said phase shift means may have the same curvature as that of said objective lens and is to be coupled with a surface of said objective lens which is relatively closer to said optical path control means.

The apparatus may have a small size of structure, in which one of the first and second lights is appropriately selected and other components are consistently used whenever one optical recording medium is changed to the other optical recording medium.

Preferably one of said laser light sources and said optical detection means are integrated as a single unit.

Variable aperture means may be provided which is located between said optical path control means and said phase shift means, having a first region for transmitting both of the first and second lights entered from said optical path control means and a second region for transmitting only the second light entered therefrom, wherein the first and the second regions have the same optical axis as that of said objective lens.

According to a second aspect of the invention, there is provided an optical pickup apparatus arranged for use with at least two optical recording media, which have different distances from an optical pickup to information recording surfaces and use lights having different wavelengths for recording and reading information, the optical pickup apparatus comprising:

laser light sources for emitting first light having a relatively shorter wavelength and second light having a relatively longer wavelength, respectively;

an objective lens having a predetermined focal length, in which the focal point of said objective lens according to the first light coincides, in use, with the position of an information recording surface in a first optical recording medium of a first type which has, in use, an information recording surface a first distance from the objective lens;

optical detection means;

means for controlling an optical path so that the light emitted from one of the laser light sources is directed to the objective lens and the light output from the objective lens is directed to said optical detection means; and

variable aperture means, located between said optical path control means and said objective lens, having a first region for transmitting both of the first and second lights entered from said optical path control means and a second region for transmitting only the first light entered therefrom wherein the first and the second regions have the same optical axis as that of said objective lens,

wherein one of the first and second lights is used according to an optical recording medium to be used, said objective lens comprises at least one annular shielding portion for shielding the part of light which is transmitted via said first region.

The second region of said variable aperture means may be constructed as a structure of diffraction grating pattern.

Phase shift means may be provided, located between said variable aperture means and said objective lens, for shifting the phase of a part of the second light proceeding from said variable aperture means to said objective lens, thereby reducing the size of a beam spot which is formed on the position of the information recording surface in the second optical recording medium having the information recording surface which is positioned farther from the objective lens by the second light focused with the objective lens.

Said phase shift means and said variable aperture means may be constructed as a single unit in which said phase shift means is formed within the first region of said variable aperture means.

For a better understanding of the invention, and to show how embodiments of the same may be carried into effect, reference will now be made, by way of example, to the accompanying diagrammatic drawings, in which:

Figure 1 is a view of a conventional optical pickup using two laser diodes as light sources for a digital video disk (DVD) and a recordable compact disk (CD-R) and a single objective lens;

Figure 2 is a view for explaining a variable aperture shown in Figure 1;

Figure 3 is a view showing an optical system of an optical pickup according to a preferred embodiment of the present invention;

Figure 4 shows a phase plate unit and an annular shield objective lens shown in Figure 3;

Figure 5 is a view showing an optical system of an optical pickup according to another preferred embodiment of the present invention;

Figure 6 shows an annular shield objective lens having a phase plate function as shown in Figure 5;

Figures 7A and 7B are views showing the combined structure of a phase plate and a variable aperture according to a preferred embodiment of the present invention;

Figure 8 is a graphical diagram showing reduction effect of a spot size and a side lobe according to an embodiment of the present invention;

Figure 9 is a graphical diagram showing characteristics of a focus servo signal during reproduction of a CD-R disk;

Figure 10 is a graphical diagram showing phase variation of the light according to the depth of the groove on the phase plate; and

Figure 11 is a graphical diagram showing variation of diffraction efficiency of zero-order diffracted light corresponding to the groove depth of the variable aperture according to an embodiment of the present invention.

Preferred embodiments of the present invention will be described below in more detail with reference to the accompanying drawings.

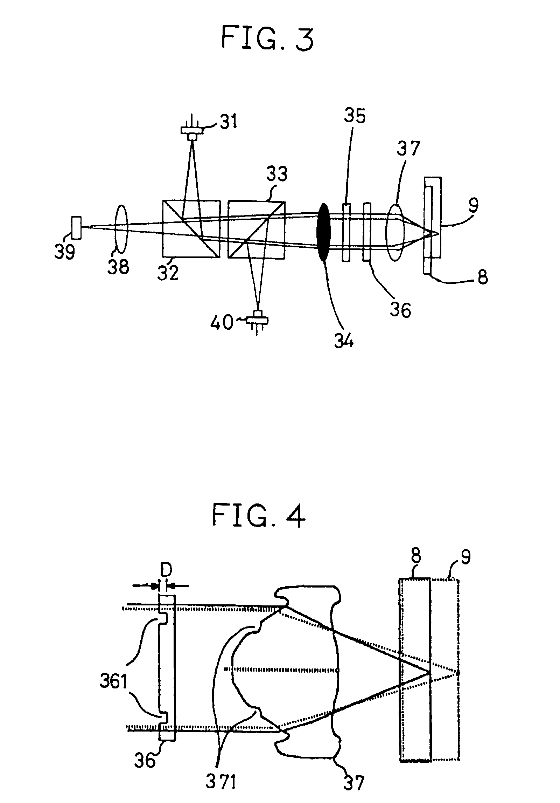

Figure 3 shows an optical system of an optical pickup according to a preferred embodiment of the present invention. Referring to Figure 3, when a laser diode light source 31 operates, the 650nm wavelength light emitting in the diverging form from the light source 31 is sequentially reflected and transmitted by a first polarization beam splitter 32 and a second polarization beam splitter 33. The light transmitting the second polarization beam splitter 33 is incident to a collimating lens 34. When a laser diode light source 40 operates, the 780nm wavelength light emitting in the diverging form from the light source 40 is reflected by the second polarization beam splitter 33 and then, is incident to the collimating lens 34. The collimating lens 34 collimates the light incident from the second polarization beam splitter 33 to be parallel to an optical axis perpendicular to the surface of a variable aperture 35, and the collimated light is selectively transmitted in wavelength by the variable aperture 35.

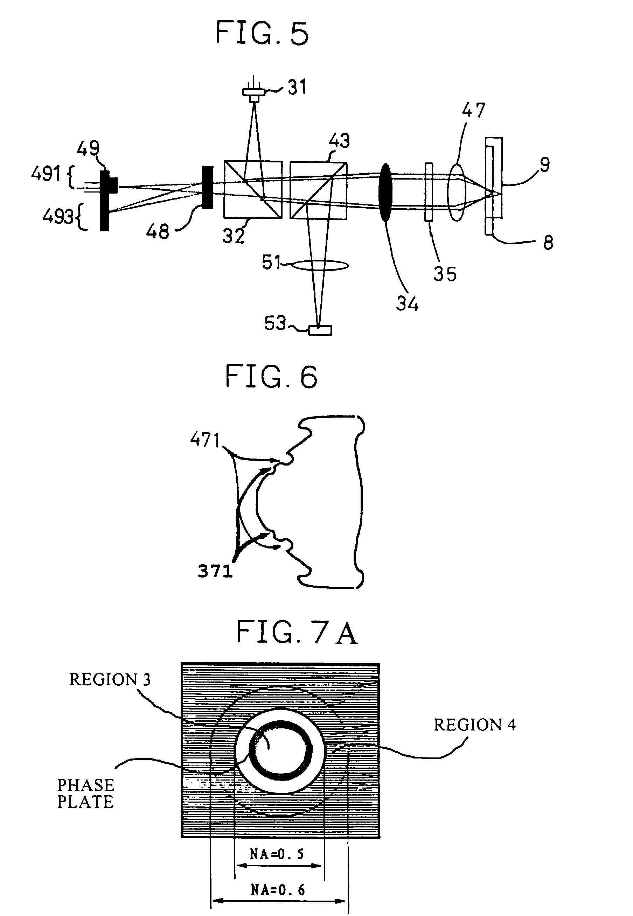

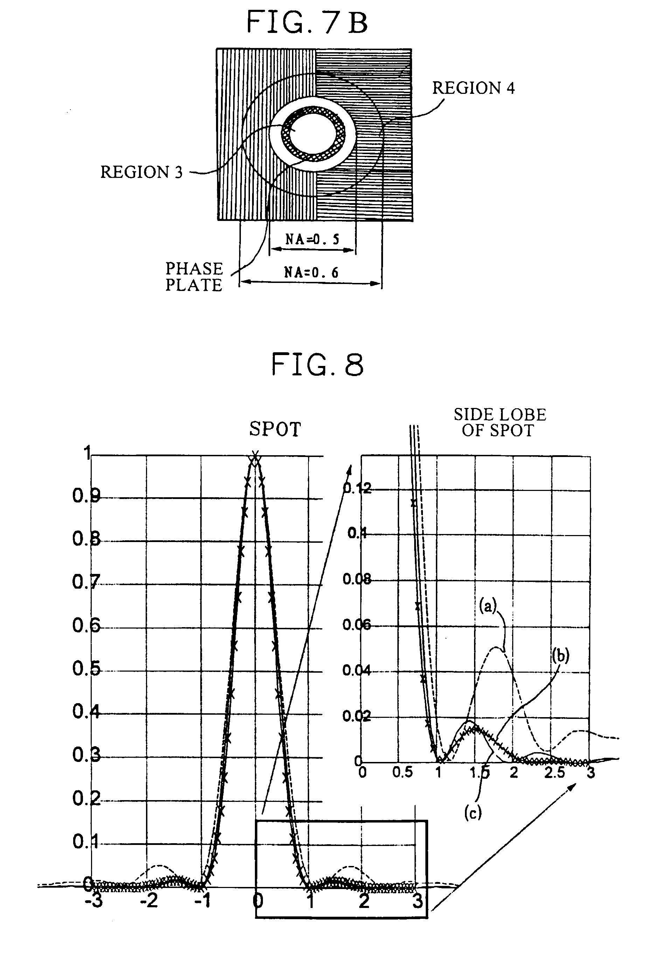

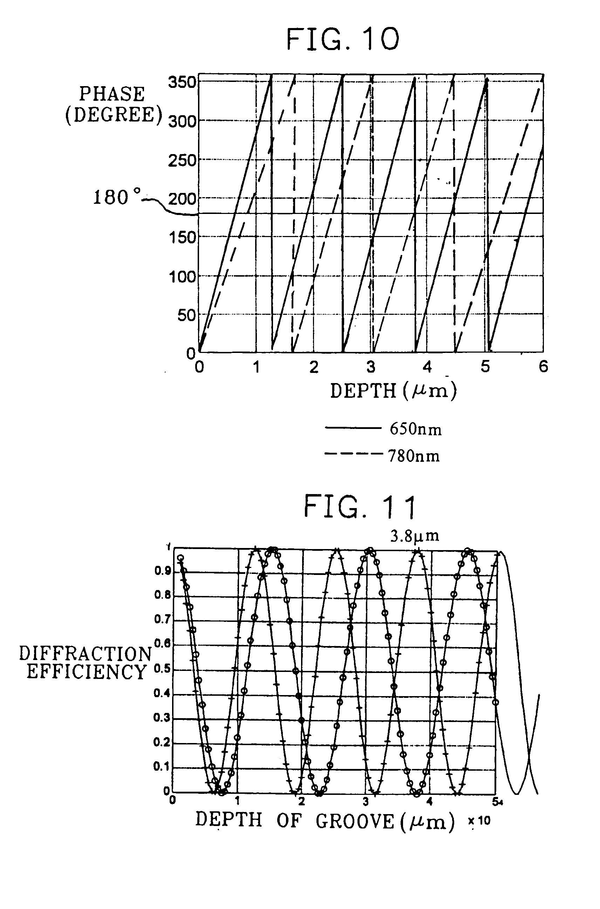

Referring to Figures 7A and 7B, the variable aperture 35 has a region 3 for transmitting both the 780nm wavelength light and the 650nm wavelength light and a region 4 for transmitting only the 650nm wavelength light. The region 4 has a hologram structure. The hologram structure includes a diffraction grating portion whose diffraction efficiency is maximized with respect to the 780nm wavelength light having diffraction order of non-zero and whose diffraction efficiency is 100% with respect to the 650nm wavelength light having the diffraction order of zero. Therefore, the 650nm wavelength light can be transmitted without diffraction by the hologram structure. Referring to Figure 11 showing the diffraction efficiency of zero-order diffracted light corresponding to the groove depth of the diffraction grating portion, when the groove depth is 3.8μm, the 650nm wavelength light has the diffraction efficiency of 100% as shown in a solid line overlapping with symbol "++", and the 780nm wavelength light has the diffraction efficiency of 0% as shown in a solid line overlapping with a circle. Therefore, the region 4 of the variable aperture 35 is designed with the diffraction grating portion having the groove depth of 3.8μm. In this embodiment, the NA of 0.5 is used for partitioning the regions 3 and 4. Therefore, the region 3 is a portion having the NA of 0.5 or below, and the region 4 is portion having the NA more than 0.5. Thus, according to the embodiment of the present invention, the light transmitting the portion having the NA not more than 0.6 coinciding with the diameter of the objective lens 37 is selectively transmitted in the regions 3 and 4 of the variable aperture 35 according to the wavelengths. The variable aperture shown in Figure 7B which is constructed with a hologram pattern of an asymmetric shape, eradicates a feedback noise produced by the light proceeding to an optical detection portion.

The light transmitting the variable aperture 35 transmits a phase plate 36 to be described later with reference to figure 4, and then is incident to an annular shielding objective lens 37. The objective lens 37 is designed to be focused on an information recording surface of the DVD 8. If the phase plate 36 of the present invention is not used, the size of the light spot formed in the information recording surface of the CD-R 9 becomes 1.8μm or above when changing the disk currently in use from the DVD 8 to the CD-R 9. However, since the conventional size of the light spot which is used in the CD-R 9 is generally 1.4μm, information cannot be recorded on or read from the CD-R 9 via the light spot having the size of 1.8μm. Therefore, embodiments of the present invention use the phase plate 36 in order to reduce the size of the light spot so that information can be recorded or read on or from the CD-R 9.

The phase plate 36 is, as shown in Figure 3, positioned between the variable aperture 35 and the objective lens 37. The phase plate 36 includes an annular groove 361 which is concave inwards from the surface closer to the variable aperture 35 and has a predetermined width and depth. The annular groove 361 is manufactured by injection or molding using an etch or metal mold, in which the depth D is determined by the following equations (1) and (2).

$$2\pi n'd/\lambda' - 2\pi d/\lambda' = (2m')\pi \qquad (1)$$

$$2\pi nd/\lambda - 2\pi d/\lambda = (2m+1)\pi \qquad (2)$$

Here, m is an integer, n' and n denote a refractive index at wavelength $\lambda'$ (650nm) and $\lambda$ (780nm), respectively. In the above equations (1) and (2), if m'=3 and m=2, the depth D of the annular groove 361 becomes about 3.9μm. The phase plate 36 having the annular groove 361 of the depth D phase-shifts the 780nm wavelength light by 180° and phase-shifts the 650nm light by 360° when the light proceeds to the objective lens 37 from the variable aperture 35. Figure 10 is a graphical diagram showing phase variation of the two wavelengths according to the depth D of the annular groove 361 on the phase plate 36, in which a solid line represents the phase variation with respect to the 650nm wavelength light and a dotted line represents that with respect to the 780nm wavelength light. When D is 3.9µm, the 780nm wavelength light has the phase of 180° and the 650nm light has the phase of 360°.

Thus, the 780nm wavelength light which is phase-shifted by 180° has a substantially super-resolution effect and passes through an aperture compared with the case when the phase plate 36 is not used. By the phase plate 36, the size of the light spot formed on the information recording surface in the CD-R 9 is reduced into a degree which can be recorded or read on or from the CD-R 9, to thereby remove spherical aberration.

The phase plate 36 can be modified into a protrusion form having a predetermined width and height protruding outwards from the surface closer to the variable aperture 35. Since such a modification is apparent to one having an ordinary skill in the art who knows the function of the phase plate, the detailed description thereof will be omitted.

The objective lens 37 to which the light transmitting the phase plate 36 is incident includes an annular shielding portion 371 as shown in Figure 4. The annular shielding portion 371 shields part of the light transmitting the region 3. Thus, the spherical aberration due to the exchange of the DVD 8 to the CD-R 9 is reduced, and a sensitivity of a focus error signal in a focus servo system (not shown) is increased.

The light reflected from the information recording surface of the DVD 8 or CD-R 9 proceeds to a light detection lens 38 from the objective lens 37, and is focused in the light detector 39 by the light detection lens 38. Thus, the Figure 3 apparatus can record or read information on or from both the DVD 8 and CD-R 9.

Figure 6 shows an objective lens 47 which is constructed by combining a phase plate 36 and an objective lens 37 of Figure 3 into a single unit. Figure 5 shows an optical system of an optical pickup having such an objective lens 47. The figure 6 objective lens 47 includes an annular groove 471 which is concave inwards from the surface closer to the variable aperture 35 and has predetermined width and depth. The objective lens 47 engraved with such an annular groove 471 phase-shifts the 780nm wavelength light by 180° as in the phase plate 36 and phase-shifts the 650nm wavelength light by 360°. Thus, among the 780nm wavelength light incident to the objective lens 47 from the variable aperture 35, the light diffracted by the annular groove 471 serves to decrease the spherical aberration with respect to the CD-R 9. The annular groove 471 removes the spherical aberration when the DVD 8 is exchanged with the CD-R 9. Accordingly, the beam spot of the small size is formed on the information recording surface so that information can be recorded or read on or from the CD-R 9 with respect to the 780nm wavelength light. The Figure 5 optical pickup includes a single unit 49 combining a light source 491 with a light detector 493 for the 780nm wavelength light, in addition to a light source 31, a light detection lens 51 and a light detector 53 for the 650nm wavelength light. The Figure 5 optical pickup further includes a hologram type beam splitter 48 for the light output from the light source 491 of the unit 49 and the light incident to the light detector 493. Since the construction and operation of the Figure 5 apparatus is apparent to a person skilled in the art who can fully understand the Figure 3 apparatus through the above-described explanation, the detailed description thereof will be omitted.

The annular groove 471 formed in objective lens 47 as shown in Figure 6 can be modified into a protrusion form which protrudes outwards from the surface of the objective lens 47 and has a predetermined width and depth.

Figure 7 is a view showing a single structure combining a phase plate with a variable aperture according to the present invention. Referring to Figure 7, a phase variation region contained in the region having the NA of 0.5 or below has a ring-shaped structure. Such a phase variation region performs the same function as that of the phase plate 36, the detailed description thereof will be omitted.

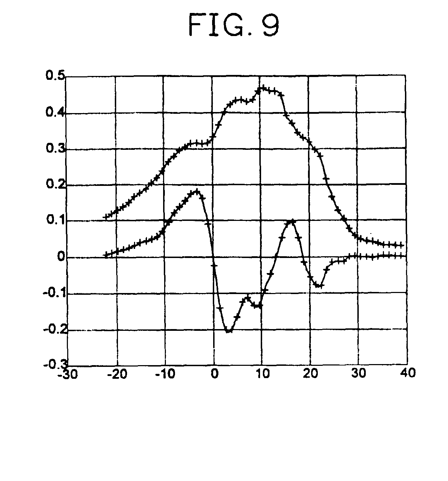

Figure 8 is a graphical diagram showing a reduction efficiency of a spot size and a side lobe. In Figure 8, a curve (a) indicates when a conventional optical pickup optimized for a DVD is used for a CD-R, in which the spot size formed in the information recording surface of the CD-R is 1.53µm. A curve (b) indicates when an optical pickup apparatus according to an embodiment of the present invention is used, in which the spot size is 1.33µm. A curve (c) indicates when a conventional optical pickup is used for a CD-R, in which the spot size is 1.41µm. It can be seen from Figure 8 that the optical pickup apparatus described herein reduces the size of the spot by about 8% compared with the conventional optical pickup. Also, as the size of the side lobe is smaller at the time of the disk recording and reproduction, it can be seen that an amount of light in the peripheral portion of the spot which is called a side lobe is reduced with respect to an optical pickup having a desirable optical characteristic. Figure 9 shows that the optical pickup apparatus according to the present invention has an excellent characteristic with respect to a focus servo signal during reproduction of the CD-R when the optical pickup apparatus detects an optical signal in the astigmatism manner, through a relatively lower graph.

The above-described embodiments have been described with the structure including a variable aperture, a phase plate and an annular shield objective lens. However, using only a phase plate, the spherical aberration due to the disk exchange is reduced and an optical spot appropriate for the CD-R can be formed on the information recording surface.

The above-described embodiments have been described in connection with an infinite optical system which is made by the collimating lens 34. However, the present invention can be applied to a finite optical system which has no collimating lens which is located between a beam divider and an objective lens, which is apparent to one skilled in the art.

As described above, embodiments of the optical pickup apparatus according to the present invention use a phase plate. Accordingly, an optical pickup can be provided which is compatibly used for a DVD and a CD-R with a single objective lens, without using a conventional type of optical apparatus which would otherwise create a problem in a manufacturing process.

While only certain embodiments of the invention have been specifically described herein, it will be apparent that numerous modifications may be made thereto within the scope of the claims.

**Claims**

1. An optical pickup apparatus arranged for use with at least two optical recording media (8, 9), which have different distances from an optical pickup to information recording surfaces and use lights having different wavelengths for recording and reading information, the optical pickup apparatus comprising:

    laser light sources (31, 40; 31, 491) for emitting first light having a relatively shorter wavelength and second light having a relatively longer wavelength, respectively;

    an objective lens (37; 47) having a predetermined focal length, in which the focal point of said objective lens (37; 47) according to the first light coincides, in use, with the position of an information recording surface in a first optical recording medium (8) of a first type which has, in use, an information recording surface a first distance from the objective lens;

    optical detection means (38, 39; 48, 493, 51, 53);

    means (32-34; 32, 43, 34) for controlling an optical path so that the light emitted from one of the laser light sources (31, 40; 31, 491) is directed to the objective lens (37; 47) and the light output from the objective lens (37; 47) is directed to said optical detection means (38, 39; 48, 493, 51, 53), wherein one of the first and second lights is used according to an optical recording medium to be used; and

    phase shift means (36), located between said optical path control means (32-34; 32, 43, 34) and said objective lens (37; 47), characterized in that the phase shift means is adapted for shifting the phase of a part of the second light proceeding from said optical path control means (32-34; 32, 43, 34) to said objective lens (37; 47), thereby reducing the size of a beam spot which, in use, is formed on the position of an information recording surface in a second optical recording medium (9) of a second type which has, in use, an information recording surface a second distance, which is greater than the first distance, from the objective lens (37; 47) by the second light (40; 491) focused with the objective lens (37; 47),

2. The optical pickup apparatus according to claim 1, wherein said phase shift means (36) is a phase plate including two regions having different thicknesses.

3. The optical pickup apparatus according to claim 2, wherein the thinner of the two regions of said phase plate comprises a portion for shifting the phase of the second light, and includes a groove (361), having a predetermined width and depth which is formed in a generally concave fashion inwards from a surface of said phase plate (36) relatively closer to said optical path control means (32-34).

4. The optical pickup apparatus according to claim 2 or 3, wherein said thinner region (361) has a shape of concentric circles with respect to the optical axis of said objective lens (37).

5. The optical pickup apparatus according to claim 3 or 4, wherein said groove (361) has an optical depth for phase-shifting the first light by a degree of 360 and phase-shifting the second light by a degree of 180.

6. The optical pickup apparatus according to claim 2, 3, 4 or 5, wherein the relatively thicker region of said phase plate (36) comprises a portion for shifting the phase of the second light (41), and includes a protrusion having a predetermined width and height which is protruded outwards from the surface of said phase plate (36) relatively closer to said optical path control means (32-34).

7. The optical pickup apparatus according to claim 6, wherein said thicker region has a shape of concentric circles with respect to the optical axis of said objective lens (37).

8. The optical pickup apparatus according to claim 6 or 7 wherein said protrusion has an optical height for phase-shifting the first light by a degree of 360 and phase-shifting the second light by a degree of 180.

9. The optical pickup apparatus according to any of claims 2 to 8, wherein said phase plate (36) is fabricated by one of etching, injection and moulding operations.

10. The optical pick up apparatus according to Claim 1, wherein said phase shift means is fabricated by etching a groove (471) into the objective lens (47), the groove (471) having a predetermined width and depth, which is concave and which extends inwards from a surface of said objective lens (47) relatively closer to said optical path control means (32, 43, 34).

11. The optical pickup apparatus according to Claim 1, wherein said phase shift means has a shape of a protrusion having a predetermined width and height, which is protruded outwards from the surface of said objective lens (47) relatively closer to said optical path control means (32, 43, 34).

12. The optical pickup apparatus according to Claim 1, wherein said phase shift means has the same curvature as that of said objective lens (47) and is to be coupled with a surface of said objective lens which is relatively closer to said optical path control means (32, 43, 34).

13. The optical pickup apparatus according to claim 1, has a small size of structure, in which one of the first and second lights (31, 40; 491, 31) is appropriately selected and other components are consistently used whenever one optical recording medium is changed to the other optical recording medium.

14. The optical pickup apparatus according to any of the preceding claims, wherein one of said laser light sources (491) and said optical detection means (493) are integrated as a single unit (49).

15. The optical pickup apparatus according to any of the preceding claims, further comprising variable aperture means (35) which is located between said optical path control means (32-34; 32, 43, 34) and said phase shift means (36; 47), having a first region for transmitting both of the first and second lights entered from said optical path control means and a second region for transmitting only the second light entered therefrom, wherein the first and the second regions have the same optical axis as that of said objective lens (36; 47).

16. An optical pickup apparatus arranged for use with at least two optical recording media, which have different distances from an optical pickup to information recording surfaces and use lights having different wavelengths for recording and reading information, the optical pickup apparatus comprising:

laser light sources for (31, 40; 31, 491) emitting first light having a relatively shorter wavelength and second light having a relatively longer wavelength, respectively;

an objective lens (37, 47) having a predetermined focal length, in which the focal point of said objective lens (37, 47) according to the first light coincides, in use, with the position of an information recording surface in a first optical recording medium (8) of a first type which has, in use, an information recording surface a first distance from the objective lens;

optical detection means (38, 39; 48, 493, 51, 53);

means (32-34, 43, 34) for controlling an optical path so that the light emitted from one of the laser light sources (31, 40; 31, 491) is directed to the objective lens (37, 47) and the light output from the objective lens (37, 47) is directed to said optical detection means (38, 39; 48, 493, 51, 53); and

variable aperture means (35), located between said optical path control means (38, 39; 48, 493, 51, 53) and said objective lens (37, 47), having a first region (3) for transmitting both of the first and second lights entered from said optical path control means and a second region (4) for transmitting only the first light entered therefrom wherein the first and the second regions (3,4) have the same optical axis as that of said objective lens,

wherein one of the first and second lights is used according to the optical recording medium to be used,

said objective lens (47) comprises at least one annular shielding portion (371) for shielding the part of light which is transmitted via said first region.

17. The optical pickup apparatus according to claim 16, wherein the second region (4) of said variable aperture means (35) is to be constructed as a structure of diffraction grating pattern.

18. The optical pickup apparatus according to claim 16, further comprising phase shift means (36), located between said variable aperture means (35) and said objective lens (37, 47), for shifting the phase of a part of the second light proceeding from said variable aperture means (35) to said objective lens (37, 47), thereby reducing the size of a beam spot which is formed on the position of the information recording surface in the second optical recording medium (9) having the information recording surface which is positioned farther from the objective lens (37, 47) by the second light focused with the objective lens.

19. The optical pickup apparatus according to claim 16, claim 17 or claim 18, wherein said phase shift means (36) and said variable aperture means (35) are constructed as a single unit in which said phase shift means is formed within the first region of said variable aperture means.

**Patentansprüche**

1. Optische Aufnehmervorrichtung, die zur Verwendung mit mindestens zwei optischen Aufzeichnungsmedien (8, 9) ausgelegt ist, welche unterschiedliche Abstände von einem optischen Aufnehmer zu Informations-Aufzeichnungsflächen haben und Licht mit unterschiedlichen Wellenlängen zum Aufzeichnen und Abiesen von Information benutzen, wobei die optische Aufzeichnungsvorrichtung umfasst:

Laserlichtquellen (31, 40; 31, 491) zum Emittieren eines ersten Lichts mit einer relativ kürzeren Wellenlänge bzw. eines zweiten Lichts mit einer relativ längeren Wellenlänge; eine Objektivlinse (37; 47) mit einer vorgegebenen Brennweite, bei der der Brennpunkt der Objektivlinse (37; 47) gemäß dem ersten Licht im Gebrauch mit der Position der Informationsaufzeichnungsfläche bei einem ersten optischen Aufzeichnungsmedium (8) einer ersten Art zusammenfällt, die im Gebrauch eine Informationsaufzeichnungsfläche mit einem ersten Abstand von der Objektivlinse aufweist; optische Erfassungsmittel (38, 39; 48, 493, 51, 53); Mittel (32-34; 32, 43, 34) zum Steuern eines optischen Pfades in der Weise, dass das von einer der Laserlichtquellen (31, 40; 31, 491) emittierte Licht auf die Objektivlinse (37; 47) gerichtet wird und das von der Objektivlinse (37; 47) ausgegebene Licht auf das optische Erfassungsmittel (38, 39; 48, 493, 51, 53) gerichtet wird, bei der das erste bzw. das zweite Licht gemäß einem einzusetzenden optischen Aufzeichnungsmedium eingesetzt wird; und zwischen das Optikpfad-Steuermittel (32-34; 32, 43, 34) und die Objektivlinse (37; 47) eingesetztes Phasenschiebermittel (36),

**dadurch gekennzeichnet,** dass das Phasenschiebermittel zum Schieben der Phase eines Teils des zweiten Lichts ausgelegt ist, das sich von dem Optikpfad-Steuermittel (32-34; 32, 43, 34) zu der Objektivlinse (37; 47) ausbreitet, um dadurch die Größe eines durch das zweite Licht (40; 491) mit der Objektivlinse (37; 47) fokussierten Strahlflecks zu verringern, der in Gebrauch an der Position der Informationsaufzeichnungsfläche in einem zweiten optischen Aufzeichnungsmedium (9) einer zweiten Art gebildet wird, das im Gebrauch eine Informationsaufzeichnungsfläche mit einem zweiten Abstand von der Objektivlinse (37; 47) aufweist, der größer ist als der erste Abstand.

2. Optische Aufnehmervorrichtung nach Anspruch 1, bei der das Phasenschiebermittel (36) eine Phasenplatte mit zwei Bereichen von unterschiedlicher Dicke ist.

3. Optische Aufnehmervorrichtung nach Anspruch 2, bei der der dünnere der beiden Bereiche der Phasenplatte einen Abschnitt zum Verschieben der Phase des zweiten Lichts umfasst und eine Nut (361) mit einer vorgegebenen Breite und Tiefe enthält, die in allgemein konkaver Weise von der dem optischen Pfadsteuermittel (32-34) zugewendeten Fläche der Phasenplatte (36) nach innen ausgebildet ist.

4. Optische Aufnehmervorrichtung nach Anspruch 2 oder 3, bei der der dünnere Bereich (361) die Gestalt von mit Bezug auf die optische Achse der Objektivlinse (37) konzentrischen Kreisen hat.

5. Optische Aufnehmervorrichtung nach Anspruch 3 oder 4, bei der die Nut (361) eine optische Tiefe zur Phasenverschiebung des ersten Lichts in einem Ausmaß von 360° und zur Phasenverschiebung des zweiten Lichts in einem Ausmaß von 180° besitzt.

6. Optische Aufnehmervorrichtung nach Anspruch 2, 3, 4 oder 5, bei der der relativ dickere Bereich der Phasenplatte (36) einen Abschnitt zum Verschieben der Phase des zweiten Lichts (41) umfasst und einen vorstehenden Bereich mit einer vorgegebenen Breite und Höhe enthält, der von der dem optischen Pfadsteuermittel (32-34) zugewendeten Fläche der Phasenplatte (36) nach außen vorsteht.

7. Optische Aufnehmervorrichtung nach Anspruch 6, bei der der dickere Bereich eine Form von mit Bezug auf die optische Achse der Objektivlinse (37) konzentrischen Kreisen hat.

8. Optische Aufnehmervorrichtung nach Anspruch 6 oder 7, bei der der vorstehende Bereich eine optische Höhe zur Phasenverschiebung des ersten Lichts in einem Ausmaß von 360° und zur Phasenverschiebung des zweiten Lichts in einem Ausmaß von 180° besitzt.

9. Optische Aufnehmervorrichtung nach einem der Ansprüche 2 bis 8, bei der die Phasenplatte (36) durch einen der Vorgänge Ätzen, Einspritzen und Formen hergestellt ist.

10. Optische Aufnehmervorrichtung nach Anspruch 1, bei der das Phasenschiebermittel durch Ätzen einer Nut (471) in die Objektivlinse (47) hergestellt ist, wobei die Nut (471) eine vorgegebene Breite und Tiefe besitzt, konkav ist und sich von einer dem Optikpfad-Steuermittel (32, 43, 34) zugewendeten Fläche der Objektivlinse (47) nach innen erstreckt.

11. Optische Aufnehmervorrichtung nach Anspruch 1, bei der das Phasenschiebermittel die Form eines vorstehenden Bereichs mit einer vorgegebenen Breite und Höhe besitzt, die von der dem Optikpfad-Steuermittel (32, 43, 34) zugewendeten Fläche der Objektivlinse (47) nach außen vorsteht.

12. Optische Aufnehmervorrichtung nach Anspruch 1, bei der das Phasenschiebermittel die gleiche Krümmung wie die Objektivlinse (47) hat und mit der dem Optikpfad-Steuermittel (32, 43, 34) zugewendeten Fläche der Objektivlinse zu koppeln ist.

13. Optische Aufnehmervorrichtung nach Anspurch 1, die eine geringe Strukturgröße hat, in welcher eine der ersten oder zweiten Lichtarten (31, 40; 491, 31) entsprechend ausgewählt, und andere Komponenten konsistent immer dann eingesetzt werden, wenn von einem optischen Aufzeichnungsmedium zu dem anderen optischen Aufzeichnungsmedium gewechselt wird.

14. Optische Aufnehmervorrichtung nach einem der vorangehenden Ansprüche, bei der eine der Laserlichtquellen (491) und das optische Erfassungsmittel (493) als eine einzige Einheit (49) integriert sind.

15. Optische Aufnehmervorrichtung nach einem der vorangehenden Ansprüche, die weiter umfasst ein variables Aperturmittel (35), das zwischen dem Optikpfad-Steuermittel (32-34; 32, 43, 34) und dem Phasenschiebermittel (36; 47) eingesetzt ist mit einem größeren Bereich zum Durchlassen sowohl des ersten wie des zweiten Lichtes, das von dem Optikpfad-Steuermittel her eintritt, und einem zweiten Bereich zum Durchlassen nur des zweiten Lichtes, das von dort her eintritt, wobei der erste und der zweite Bereich die gleiche optische Achse wie die der Objektivlinse (36; 47) aufweisen.

16. Optische Aufnehmervorrichtung, die zur Verwendung mit mindestens zwei optischen Aufzeichnungsmedien ausgelegt ist, die unterschiedliche Abstände von einem optischen Aufnehmer zur Informationsaufzeichnungsfläche besitzen und Licht mit unterschiedlichen Wellenlängen zum Aufzeichnen bzw. Lesen von Information benützen, wobei die optische Aufnehmervorrichtung umfasst:

Laserlichtquellen (31, 40; 31, 491) zum emittieren von erstem Licht mit einer relativ kürzeren Wellenlänge bzw. zweitem Licht mit einer relativ längeren Wellenlänge;

eine Objektivlinse (37, 47) mit einer vorgegebenen Brennweite, bei der der Brennpunkt der Objektivlinse (37, 47) für das erste Licht in Verwendung mit der Position der Informationsaufzeichnungsfläche in einem ersten optischen Aufzeichnungsmedium (8) einer ersten Art zusammenfällt, die im Gebrauch eine Informationsaufzeichnungsfläche mit einem ersten Abstand von der Objektivlinse besitzt;

optisches Erfassungsmittel (38, 39; 48, 493; 51, 53);

Mittel (32-34, 43, 34) zum Steuern eines optischen Pfads in der Weise, dass das von einer der Laserlichtquellen (31, 40; 31, 491) emittierte Licht zu der Objektivlinse (37, 47) gerichtet wird, und das von der Objektivlinse (37, 47) austretende Licht zu dem optischen Erfassungsmittel (38, 39; 48, 493, 51, 53) gerichtet wird; und

variables Aperturmittel (35), das zwischen das Optikpfad-Steuermittel (38, 39; 48, 493, 51, 53) und die Objektivlinse (37, 47) eingesetzt ist, mit einem ersten Bereich (3) zum Durchlassen des ersten wie des zweiten Lichtes, das von dem Optikpfad-Steuermittel her eintritt, und einem zweiten Bereich (4) zum Durchlassen nur des ersten von dort eintretenden Lichts, wobei der erste und der zweite Bereich (3, 4) die gleiche optische Achse wie die Objektivlinse aufweisen,

wobei entweder das erste oder das zweite Licht entsprechend dem einzusetzenden optischen Aufzeichnungsmedium verwendet wird; und

die Objektivlinse (47) mindestens einen ringförmigen Schirmabschnitt (371) zum Abschirmen eines Teils des Lichts umfasst, das über den ersten Bereich durchgelassen wird.

17. Optische Aufnehmervorrichtung nach Anspruch 16, bei der der zweite Bereich (4) des variablen Aperturmittels (35) als eine Struktur mit Beugungsgittermuster aufgebaut ist.

18. Optische Aufnehmervorrichtung nach Anspruch 16, die weiter zwischen dem variablen Aperturmittel (35) und der Objektivlinse (37, 47) gelegenes Phasenschiebermittel (36) umfasst, zum Verschieben der Phase eines Teils des zweiten, sich von dem variablen Aperturmittel (35) zu der Objektivlinse (37, 47) ausbreitenden Lichts, um dadurch die Größe eines Strahlflecks zu verringern, der an der Position der Informationsaufzeichnungsfläche des zweiten optischen Aufzeichnungsmediums (9) durch das zweite mit der Objektivlinse fokussierte Licht gebildet wird, wobei die Informationsaufzeichnungsfläche hier weiter von der Objektivlinse (37, 47) weg positioniert ist.

19. Optische Aufnehmervorrichtung nach Anspruch 16, 17 oder 18, bei der das Phasenschiebermittel (36) und das variable Aperturmittel (35) als eine einzige Einheit aufgebaut ist, in der das Phasenschiebermittel innerhalb des ersten Bereichs des variablen Aperturmittels gebildet ist.

**Revendications**

1. Appareil de lecture optique conçu pour être utilisé en association avec au moins deux supports d'enregistrement optique (8, 9) qui présentent des distances différentes entre une tête de lecture optique et des surfaces d'enregistrement d'informations et qui utilisent des lumières ayant des longueurs d'ondes différentes pour enregistrer et lire des informations, l'appareil de lecture optique comprenant :

des sources de lumière laser (31, 40 ; 31, 491) destinées à émettre respectivement une première lumière ayant une longueur d'onde relativement plus courte et une seconde lumière ayant une longueur d'onde relativement plus longue ;
une lentille d'objectif (37 ; 47) ayant une longueur focale prédéterminée, le point focal de ladite lentille d'objectif (37 ;47) pour la première lumière coïncidant, en service, avec la position d'une surface d'enregistrement d'informations d'un premier support d'enregistrement optique (8) d'un premier type qui a, en service, une surface d'enregistrement d'informations située à une première distance de la lentille d'objectif ;
des moyens de détection optique (38, 39 ; 48, 493, 51, 53) ;
des moyens (32-34 ; 32, 43 , 34) destinés à commander un trajet optique pour que la lumière émise à partir de l'une des sources de lumière laser (31, 40 ; 31, 491) soit dirigée vers la lentille d'objectif (37 ; 47) et que la lumière sortant de la lentille d'objectif (37 ; 47) soit dirigée vers lesdits moyens de détection optique (38, 39 ; 48, 493, 51, 53) ; l'une des première et seconde lumières étant utilisée en fonction d'un support d'enregistrement optique qui doit être employé ; et

des moyens de déphasage (36) positionnés entre lesdits moyens de commande de trajet optique (32-34 ; 32, 43, 34) et ladite lentille d'objectif (37 ; 47),

caractérisé en ce que les moyens de déphasage sont adaptés pour changer la phase d'une partie de la seconde lumière se propageant desdits moyens de commande de trajet optique (32-34 ; 32, 43, 34) à ladite lentille d'objectif (37 ; 47), pour ainsi réduire la taille d'un point produit par un faisceau, qui, en service, est formé au niveau de la position d'une surface d'enregistrement d'informations d'un second support d'enregistrement optique (9) d'un second type qui a, en service, une surface d'enregistrement d'informations située à une seconde distance, supérieure à la première distance, par rapport à la lentille d'objectif (37 ; 47), par la seconde lumière (40 ; 491) focalisée par la lentille d'objectif (37 ; 47).

2. Appareil de lecture optique selon la revendication 1, dans lequel lesdits moyens de déphasage (36) consistent en une lame de phase qui comprend deux zones ayant des épaisseurs différentes .

3. Appareil de lecture optique selon la revendication 2, dans lequel la plus mince des deux zones de ladite lame de phase comprend une partie destinée à changer la phase de la seconde lumière, et comporte une rainure (361) de largeur et profondeur prédéterminées qui est formée d'une manière sensiblement concave vers l'intérieur depuis une surface de ladite lame de phase (36), située relativement plus près desdits moyens de commande de trajet optique (32-34).

4. Appareil de lecture optique selon la revendication 2 ou 3, dans lequel ladite zone plus mince (361) se présente sous la forme de cercles concentriques par rapport à l'axe optique de ladite lentille d'objectif (37).

5. Appareil de lecture optique selon la revendication 3 ou 4, dans lequel ladite rainure (361) a une profondeur optique propre à changer la phase de la première lumière de 360 degrés et la phase de la seconde lumière de 180 degrés.

6. Appareil de lecture optique selon l'une quelconque des revendications 2, 3, 4 et 5, dans lequel la zone relativement plus épaisse de ladite lame de phase (36) comprend une partie destinée à changer la phase de la seconde lumière (41), et comporte une protubérance de largeur et hauteur prédéterminées qui fait saillie vers l'extérieur depuis la surface de ladite lame de phase (36), située relativement plus près desdits moyens de commande de trajet optique (32-34).

**7.** Appareil de lecture optique selon la revendication 6, dans lequel ladite zone plus épaisse se présente sous la forme de cercles concentriques par rapport à l'axe optique de ladite lentille d'objectif (37).

**8.** Appareil de lecture optique selon la revendication 6 ou 7, dans lequel ladite protubérance a une hauteur optique propre à changer la phase de la première lumière de 360 degrés et la phase de la seconde lumière de 180 degrés.

**9.** Appareil de lecture optique selon l'une quelconque des revendications 2 à 8, dans lequel ladite lame de phase (36) est fabriquée à l'aide de l'une des opérations comprenant une attaque chimique, une injection et un moulage.

**10.** Appareil de lecture optique selon la revendication 1, dans lequel lesdits moyens de déphasage sont réalisés par formation par attaque chimique d'une rainure (471) dans la lentille d'objectif (47), rainure (471) de largeur et profondeur prédéterminées qui est concave et qui s'étend vers l'intérieur depuis une surface de ladite lentille d'objectif (47), située relativement plus près desdits moyens de commande de trajet optique (32, 43, 34).

**11.** Appareil de lecture optique selon la revendication 1, dans lequel lesdits moyens de déphasage se présentent sous la forme d'une protubérance de largeur et hauteur prédéterminées qui fait saillie vers l'extérieur depuis la surface de ladite lentille d'objectif (47), située relativement plus près desdits moyens de commande de trajet optique (32, 43, 34).

**12.** Appareil de lecture optique selon la revendication 1, dans lequel lesdits moyens de déphasage ont la même courbure que ladite lentille d'objectif (47) et sont destinés à être reliés à une surface de celle-ci située relativement plus près desdits moyens de commande de trajet optique (32, 43, 34).

**13.** Appareil de lecture optique selon la revendication 1, ayant une structure de faibles dimensions dans laquelle l'une des première et seconde lumières (31, 40 ; 491, 31) est sélectionnée de manière appropriée et d'autres organes sont utilisés en conséquence à chaque fois que l'un des supports d'enregistrement optique est changé pour l'autre support d'enregistrement optique.

**14.** Appareil de lecture optique selon l'une quelconque des revendications précédentes, dans lequel l'une (491) desdites sources de lumière laser et lesdits moyens de détection optique (493) sont intégrés pour former un seul élément (49).

**15.** Appareil de lecture optique selon l'une quelconque des revendications précédentes, comprenant également des moyens formant ouverture variable (35) positionnés entre lesdits moyens de commande de trajet optique (32-34 ; 32, 43, 34) et lesdits moyens de déphasage (36 ; 47), qui comportent une première zone destinée à transmettre les deux première et seconde lumières introduites à partir desdits moyens de commande de trajet optique, et une seconde zone destinée à transmettre uniquement la seconde lumière introduite à partir de ceux-ci, les première et seconde zones ayant le même axe optique que ladite lentille d'objectif (36 ; 47).

**16.** Appareil de lecture optique conçu pour être utilisé en association avec au moins deux supports d'enregistrement optique qui présentent des distances différentes entre une tête de lecture optique et des surfaces d'enregistrement d'informations et qui utilisent des lumières ayant des longueurs d'ondes différentes pour enregistrer et lire des informations, l'appareil de lecture optique comprenant :

des sources de lumière laser (31, 40 ; 31, 491) qui émettent respectivement une première lumière ayant une longueur d'onde relativement plus courte et une seconde lumière ayant une longueur d'onde relativement plus longue ;
une lentille d'objectif (37 , 47) ayant une longueur focale prédéterminée, le point focal de ladite lentille d'objectif (37 , 47) pour la première lumière coïncidant, en service, avec la position d'une surface d'enregistrement d'informations d'un premier support d'enregistrement optique (8) d'un premier type qui a, en service, une surface d'enregistrement d'informations située à une première distance de la lentille d'objectif ;
des moyens de détection optique (38, 39 ; 48, 493, 51, 53) ;
des moyens (32-34 , 43 , 34) destinés à commander un trajet optique pour que la lumière émise à partir de l'une des sources de lumière laser (31, 40 ; 31, 491) soit dirigée vers la lentille d'objectif (37 , 47) et que la lumière sortant de la lentille d'objectif (37 , 47) soit dirigée vers lesdits moyens de détection optique (38, 39 ; 48, 493, 51, 53) ; et
des moyens formant ouverture variable (35) positionnés entre lesdits moyens de commande de trajet optique (38, 39 ; 48, 493, 51, 53) et ladite lentille d'objectif (37, 47), qui comportent une première zone (3) destinée à transmettre les deux première et seconde lumières introduites à partir desdits moyens de commande de trajet optique, et une seconde zone (4) destinée à transmettre uniquement la première lumière introduite à partir de ceux-ci, les première et seconde zones (3, 4) ayant le même axe optique que ladite lentille d'objectif, l'une des première et seconde lumières étant utilisée en fonction du support d'enregistrement qui doit être employé, et ladite lentille d'objectif (47) comprenant au moins une partie formant écran annulaire (371) destinée à faire écran à la partie de la lumière qui est transmise par l'intermédiaire de ladite première zone.

17. Appareil de lecture optique selon la revendication 16, dans lequel la seconde zone (4) desdits moyens formant ouverture variable (35) est destinée à être réalisée sous la forme d'une structure présentant la configuration d'un réseau de diffraction.

18. Appareil de lecture optique selon la revendication 16, comprenant également des moyens de déphasage (36) positionnés entre lesdits moyens formant ouverture variable (35) et ladite lentille d'objectif (37, 47) pour changer la phase d'une partie de la seconde lumière se propageant desdits moyens formant ouverture variable (35) à ladite lentille d'objectif (37, 47), pour ainsi réduire la taille d'un point produit par un faisceau, formé au niveau de la position de la surface d'enregistrement d'informations du second support d'enregistrement optique (9) dont la surface d'enregistrement d'informations est située plus loin de la lentille d'objectif (37, 47), par la seconde lumière focalisée par la lentille d'objectif.

19. Appareil de lecture optique selon la revendication 16, 17 ou 18, dans lequel lesdits moyens de déphasage (36) et lesdits moyens formant ouverture variable (35) sont réalisés sous la forme d'un élément unique dans lequel lesdits moyens de déphasage sont formés à l'intérieur de la première zone desdits moyens formant ouverture variable.

# FIG. 1

# FIG. 2

# FIG. 3

# FIG. 4

# FIG. 5

# FIG. 6

# FIG. 7A

REGION 3

REGION 4

PHASE
PLATE

NA=0.5

NA=0.6

# FIG. 7 B

REGION 4

REGION 3

NA=0.5

NA=0.6

PHASE
PLATE

# FIG. 8

SPOT

SIDE LOBE
OF SPOT

(a)

(b)

(c)

FIG. 9

# FIG. 10

——— 650nm

– – – – 780nm

# FIG. 11